# EUROPÄISCHE PATENTSCHRIFT

(11) **EP 3 188 868 B1**
(45) Veröffentlichungstag und Bekanntmachung des Hinweises auf die Patenterteilung: **07.12.2022**
(21) Anmeldenummer: 15756554.0
(22) Anmeldetag: 03.08.2015
(51) Int. Cl.: B23B 27/08, B23D 71/00, B23D 71/02, B23F 17/00, B23F 19/10, B23F 21/00

(54) **VERZAHNUNGSBEARBEITUNGSANORDNUNG UND VERFAHREN ZUM BEARBEITEN EINER VERZAHNUNG, BEARBEITUNGSWERKZEUG UND WERKZEUGMASCHINE**
TOOTHING MACHINING ARRANGEMENT, METHOD FOR MACHINING A TOOTHING, A TOOL FOR MACHINING AND A MACHINE TOOL
AGENCEMENT D'USINAGE DE DENTURES, PROCÉDÉ PERMETTANT DE FAIRE FONCTIONNER UNE DENTURE, OUTIL D'USINAGE ET MACHINE-OUTIL

(30) Priorität: 05.09.2014 DE 102014013230
(43) Veröffentlichungstag der Anmeldung: 12.07.2017
(73) Patentinhaber: Gleason-Pfauter Maschinenfabrik GmbH, 71636 Ludwigsburg (DE)
(72) Erfinder: HANUS, Elmar, 71282 Hemmingen (DE); SCHMEZER, Ralf, 71634 Ludwigsburg (DE)
(74) Vertreter: Leinweber & Zimmermann
(86) Internationale Anmeldenummer: PCT/EP2015/001593
(87) Internationale Veröffentlichungsnummer: WO 2016/034260

(56) Entgegenhaltungen:
- EP-A2- 0 497 257
- DE-C1- 4 020 611
- DE-U1- 8 026 616
- DE-U1- 8 307 877
- US-A- 5 158 400

## Beschreibung

Die Erfindung betrifft eine Verzahnungsbearbeitungsanordnung und ein Verfahren zum Bearbeiten einer an einer Zahnkopfstirnkante mit einer Fase versehenen Verzahnung, sowie dazu geeignete Bearbeitungswerkzeuge und -maschinen.

Bekannterweise erhält die Zahnkopfstirnkante einer Verzahnung oftmals eine dem Schutz des Zahnkopfes dienende Fase, die bereits am Radrohling vor Erzeugung der Verzahnung selbst vorhanden ist. Diese Fase ist beispielsweise in Bild 8.1-1, linkes oberes Bild in Thomas Bausch, Innovative Zahnradfertigung, 3. Aufl. auf Seite 304 dargestellt und dort mit C bezeichnet. In der der Erzeugung der Verzahnung folgenden Verzahnungsnachbearbeitung wird dagegen oftmals die in diesem Bild mit B bezeichnete Fase an der Zahnstirnkante erzeugt. Dies kann schneidend erfolgen oder mittels plastischer Verformung beispielsweise durch das bekannte und auch in der Literaturstelle Bausch nachfolgend beschriebene Wälzentgraten. Die Qualität der nachbearbeiteten Verzahnung hängt daher eng mit der Art und Genauigkeit der Erzeugung der Zahnstirnkantenfase zusammen. Zudem entstehen bei der Fasenbildung einer Zahnstirnkante mittels plastischer Verformung zum einen die sog. Sekundärgrate an der Stirnseite der Verzahnung sowie Materialaufwürfe auf den Zahnflanken, die jeweils aus diversen Gründen ebenfalls zu beseitigen sind, beispielsweise durch Glattwalzen der Materialaufwürfe auf den Zahnflanken, durch Abschneiden oder Abfeilen der Sekundärgrate etc. Auch die Ausführung dieser Nachbearbeitungen beeinflußt die Verzahnungsqualität

Der Erfindung liegt die Aufgabe zugrunde, bei einem Verfahren der eingangs genannten Art Verzahnungen mit hoher Verzahnungsqualität bereitzustellen.

DE 8307877 U1 offenbart eine Bearbeitung einer Zahnkopfstirnkantenfase einer Verzahnung mittels einer Drückscheibe, aufgrund deren kegeligen Mantelflächen Sekundärgrate an der Kopffase abreißen oder eingedrückt werden, oder auch in Form einer schneidenden Bearbeitung in einer Drehoperation mittels einer Wendeschneidplatte und somit eine Verzahnungsbearbeitungsanordnung nach dem Oberbegriff von Anspruch 1, ein Verfahren nach dem Oberbegriff von Anspruch 7 und ein Bearbeitungswerkzeug nach dem Oberbegriff von Anspruch 14.

DE 40 20 611 C1 offenbart ein Verfahren zur schneidenden Bearbeitung einer insgesamt gegenüber einer Ebene senkrecht zur Werkstückdrehachse geneigten Zahnstirnfläche.

DE 80 266 16 U1 offenbart ein Verfahren zur schneidenden Bearbeitung einer Planseite einer mit Zahnkopfstirnkantenfase gebildeter Verzahnung.

EP 0 479 257 A2 offenbart eine Weiterbildung bekannter Abstechvorrichtungen, bei der eine Klingenplatte in einer Ebene senkrecht zur Einstichrichtung drehbar mit einer Aufnahme verbunden ist, wobei die relative Drehlage der Klingenplatte zu der Aufnahme einstellbar ist und die Aussparung im Bereich einer Umfangswand der Klingenplatte angeordnet ist. Durch diese relative Verdrehbarkeit der Klingenplatte gegenüber dem Aufnahmeteil kann das in der Klingenplatte angeordnete Stechplättchen in seiner Höhenlage optimal angepasst werden, so dass man nicht nur zu Beginn, sondern auf einfache Weise während des Betriebs durch eine Verstellung der relativen Drehlage zwischen Klingenplatte und Aufnahme entsprechende Höhenkorrekturen vornehmen kann, wodurch insbesondere die Standzeit deutlich verlängert wird, da aufgrund der durch das einfache Nachjustieren ermöglichten optimalen Einstellung keine so hohen Belastungen auf die Klingenplatte und das Stechplättchen wirken.

Zur Lösung der oben genannten Aufgabe stellt die Erfindung bereit eine Verzahnungsbearbeitungsanordnung mit den Merkmalen von Anspruch 1, ein Verfahren zum Bearbeiten einer an einer Zahnkopfstirnkante mit einer Fase versehenen Verzahnung mit den Merkmalen von Anspruch 7, und ein Bearbeitungswerkzeug mit den Merkmalen von Anspruch 14.

Bereitgestellt wird somit eine Weiterbildung des Verfahrens der eingangs genannten Art, bei dem ein infolge einer Fasenbildung an einer Zahnstirnkante der Verzahnung mittels plastischer Verformung und/oder infolge einer Beseitigung eines bei der Erzeugung der Verzahnung und ggf. der Zahnstimkantenfasenbildung an der Stirnseite erzeugten Primär-/Sekundärgrates an der Zahnkopfstirnkantenfase entstandener Materialüberstand durch einen Bearbeitungseingriff eines mit einer Schneide versehenen, wie in Anspruch 1 spezifizierten Bearbeitungswerkzeugs in einer Drehoperation abgenommen wird.

Dabei beruht die Erfindung zum einen auf dem Gedanken, daß im Prozeß der Verzahnungserzeugung und der Zahnstimkantenfasenbildung auch an der Zahnkopfstirnkantenfase Materialüberstände entstehen können, deren Entfernung mittels einer Drehoperation zu einer erhöhten Verzahnungsqualität führt. Zudem beruht die Erfindung auf Erkenntnissen hinsichtlich einer entsprechend in die gesamte Verzahnungsbearbeitung geeignet zu integrierenden Schneide für die Drehoperation.

In einer bevorzugten Ausführungsform erfolgt die Beseitigung der Sekundärgrate und/oder die Fasenbildung an der Zahnstimkante an demselben Ort und/oder in derselben Aufspannung der bearbeiteten Verzahnung wie die Drehoperation und insbesondere von der gleichen Seite her. Dies erlaubt kürzere Bearbeitungszeiten und konstruktiv kompaktere Realisierungen für die Bearbeitung. Bevorzugt wird innerhalb der Fasenbildung der Zahnstirnkante eine Drehrichtungsumkehr durchgeführt, nicht aber zwischen der Fasenbildung der Zahnstimkante und der Drehoperation. Dadurch erhält man gute Bearbeitungsergebnisse bei geringen Nebenzeiten.

In einer besonders bevorzugten Verfahrensgestaltung erfolgt die Beseitigung der Sekundärgrate mit dem gleichen Bearbeitungswerkzeug wie die Drehoperation, insbesondere durch Abfeilen. Dadurch wird weiter die Kompaktheit der zur Bearbeitung erforderlichen Werkzeugstrukturen verbessert und insbesondere die Qualität der bearbeiteten Stimflächen der Verzahnung erhöht. Bevorzug erfolgt die Drehoperation vor der Sekundärgratbeseitigung. Zudem kann während der Sekundärgratbeseitigung eine Zahnflankennachbearbeitung stattfinden.

Gemäß einem weiteren bevorzugten Verfahrensaspekt nimmt man ebenfalls mit dem Bearbeitungswerkzeug insbesondere während der Erzeugung der Verzahnung eine Beseitigung der dabei entstandenen Primärgrate an der Stirnseite der Verzahnung vor. Auf diese Art und Weise können die Werkzeuge zur Sekundärgratbeseitigung entlastet werden, zudem wird insbesondere die zur Bearbeitung erforderliche Werkzeugstruktur nochmals kompakter.

In einer weiteren bevorzugten Verfahrensgestaltung sind eine werkzeugseitige radiale Zustellbewegung für die Zahnstirnkantenfasenbildung und für die Drehoperation gekoppelt, eine werkzeugseitige axiale Verschiebungsbewegung für die Zahnstirnkantenfasenbildung und für die Drehoperation gekoppelt und/oder werkzeugseitige rotatorische Bewegungsmöglichkeiten zur Zahnstirnkantenfasenbildung und Drehoperation voneinander entkoppelt. Auf diese Weise wird ein guter Ausgleich zwischen Verfahrensflexibilität und Raum- und Arbeitsersparnis erreicht.

In einer besonders bevorzugten Ausgestaltung des Verfahrens wird das Bearbeitungswerkzeug zwischen seinem Einsatz und der Zahnstirnkantenfasenbildung in eine unterschiedliche Drehlage verbracht. Dies erlaubt raumsparende und dennoch nicht kollisionsanfällige Werkzeugstrukturen für die Bearbeitung.

Das gemäß Anspruch 14 bereitgestellte Bearbeitungswerkzeug ist unter anderem ein Bearbeitungswerkzeug zur Bearbeitung einer an einer Zahnkopfstimkante einer Verzahnung gebildeten Fase, mit einer Schneidkante zur Abnahme eines Materialüberstands von der Zahnkopfstirnkantenfase, wobei das Bearbeitungswerkzeug scheibenartig mit einem gegenüber einem ersten umfänglichen Bereich einer ersten radialen Erstreckung eine unterschiedliche radiale Erstreckung aufweisenden zweiten umfänglichen Bereich gebildet ist und die Schneidkante an einem Übergang zwischen dem ersten und dem zweiten umfänglichen Bereich angeordnet ist. Die Geometrie des erfindungsgemäßen Bearbeitungswerkzeuges erlaubt eine Vielzahl von kompakt realisierten Funktionen raumsparender Natur.

Der erste umfängliche Bereich weist an wenigstens einer seiner Planseiten eine eine Feile bildende Oberflächenstruktur auf. Dies erlaubt eine hohe Qualität der Stirnflächen der Werkstückverzahnung durch Abfeilen der Sekundärgrate.

In einer besonders bevorzugten Ausgestaltung hat der zweite Bereich eine geringere radiale Ausdehnung als der erste Bereich. Dies erlaubt kollisionsfreie Positionierungen des Bearbeitungswerkzeuges im Nichteinsatz. Insbesondere ist vorgesehen, daß der radiale Ausdehnungsunterschied zwischen erstem und zweitem Bereich um nicht mehr als 70 %, bevorzugt nicht mehr als 50 %, insbesondere nicht mehr als 30 %, von dem Doppelten der radialen Tiefe der Feilenstruktur abweicht. In Umfangsrichtung wird bevorzugt, daß sich der zweite Bereich über wenigstens 40°, bevorzugt wenigstens 50°, durchaus auch über 60° oder mehr erstreckt. Der Abschnitt des ersten Bereichs mit Feilenstruktur sollte sich dagegen über wenigstens 80°, bevorzugt wenigstens 100°, insbesondere wenigstens 120°, erstrecken.

In einer weiter bevorzugten Ausgestaltung ist am Übergang eine Trennfläche mit einer radialen und einer axialen Haupterstreckungskomponente gebildet. Das bedeutet, daß sich zwei Vektoren finden lassen, die die Trennfläche aufspannen und mit überwiegender Richtungskomponente einmal radial und einmal axial verlaufen.

In einer Ausführungsform kann die Schneidkante eine Außenkante der Trennfläche darstellen. In einer anderen Ausführungsform kann ein Schneideinsatz verwendet werden, der die Schneidkante trägt, insbesondere ein HM-Einsatz, der geeignet an dem Werkzeug angebracht ist, insbesondere auf der Trennfläche.

In einer weiteren bevorzugten Ausführungsform weist der erste Bereich zwei in ihrer geometrischen Konfiguration unterschiedliche und insbesondere umfänglich voneinander beabstandete Unterbereiche auf, beispielsweise in Form unterschiedlicher Radien. Auf diese Weise wird die Flexibilität des Bearbeitungswerkzeugs erhöht, und es kann insbesondere auf unterschiedliche Konturen/Störkonturen an beiden Seiten der bearbeiteten Werkstückverzahnung reagiert werden. Dabei kann der Unterschied in der Konfiguration auch in der Gestaltung der Übergänge zu den Bereichen radial geringerer Ausdehnung liegen.

In diesem Zusammenhang ist insbesondere vorgesehen, daß ein umfänglicher, zwischen zwei Unterbereichen gebildeter Zwischenbereich am Übergang zu einem angrenzenden Unterbereich ebenfalls eine Schneidkante aufweist und/oder gegenüber diesem eine geringere radiale Ausdehnung hat. Der Zwischenbereich kann somit dieselben Grundfunktionen ausüben wie der zweite umfängliche Bereich, zudem bei Bedarf aber in geometrisch anderer Anpassung.

In einer weiter bevorzugten Ausführungsform ist im Bereich des Übergangs zwischen dem ersten und dem zweiten Bereich eine weitere Schneidkante gebildet, deren Erstreckungsrichtung im wesentlichen parallel zur Scheibenebene verläuft, mit wenigstens einer radialen Richtungskomponente. Somit wird eine Schneidkante insbesondere zur Beseitigung von bei der Verzahnungserzeugung hervorgerufenen Primärgraten an der Stirnseite bereitgestellt.

Das Bearbeitungswerkzeug soll in unterschiedliche Drehlagen verbringbar sein und ist dazu an einem zentralen Scheibenbereich für eine eine Drehbarkeit um seine Scheibenachse erlaubende Aufspannung ausgelegt.

Bevorzugt ist das Bearbeitungswerkzeug hinsichtlich der Funktion der Feilenstruktur für eine drehrichtungsunabhängige Wirkung ausgelegt. Dadurch wird unabhängig z. B. von der Steigungsrichtung eines Wälzfräsers eine Parallelbearbeitung mit diesem möglich.

Des weiteren von der Erfindung unter Schutz gestellt wird auch eine Verzahnungsbearbeitungsanordnung mit einem um seine Anfaswerkzeugachse drehbar angetriebenen Anfaswerkzeug zur plastischen Verformung einer Stirnkante einer Verzahnung, insbesondere im Wälzentgraten, und einem Bearbeitungswerkzeug, das nach einem oder mehreren der oben erläuterten Gesichtspunkte ausgebildet ist.

Dabei ist insbesondere vorgesehen, daß das Anfaswerkzeug und das Bearbeitungswerkzeug zur Bearbeitung einer Verzahnung von der gleichen Seite her positioniert sind und bevorzugt parallele, insbesondere koaxiale Drehachsen aufweisen. Dies erlaubt die Bildung einer kompakten Anfas- und Entgratstation.

Dazu ist insbesondere vorgesehen ein erster sowohl die radiale Zustellung des Anfaswerkzeugs als auch die des Bearbeitungswerkzeugs bewirkender gemeinsamer Antrieb und/oder ein zweiter sowohl die axiale Verschiebung des Anfaswerkzeugs als auch die des Bearbeitungswerkzeugs bewirkender gemeinsamer Antrieb. Auf diese Weise wird durch synergetische Antriebsnutzung eine kompaktere und auch günstiger herstellbare Anfas- und Entgratstation ermöglicht.

Andererseits ist bevorzugt vorgesehen, daß das Anfaswerkzeug und das Bearbeitungswerkzeug um ihre jeweiligen Achsen unabhängig voneinander drehbar antreibbar sind und entsprechende getrennte Drehantriebe aufweisen, insbesondere CNC-gesteuerte Direktantriebe.

In diesem Zusammenhang ist vorgesehen, daß die Verzahnungsbearbeitungsanordnung eine erste Betriebsstellung einnehmen kann, in der das Anfaswerkzeug das Schneidwerkzeug bezüglich der radialen Zustellrichtung auf die zu bearbeitende Verzahnung hin radial überragt und in einer zweiten Betriebsstellung vice versa, wobei ein Übergang zwischen den beiden Betriebsstellungen durch eine Drehung des Bearbeitungswerkzeugs bewirkbar ist. Dies erlaubt eine kollisionsfreie Anordnung der jeweiligen Werkzeuge bei deren Nichteinsatz.

Zur Reaktion auf etwaige geringfügige Unebenheiten ist das Bearbeitungswerkzeug gegenüber dem Anfaswerkzeug in einer zweckmäßigen Ausgestaltung axial federnd gelagert.

Schließlich wird von der Erfindung noch unter Schutz gestellt eine Werkzeugmaschine zur Verzahnungsbearbeitung mit einem Verzahnungswerkzeug, insbesondere einem Wälzfräser, zur Erzeugung einer Verzahnung an einem Werkstück sowie einem Bearbeitungswerkzeug nach einem der vorgenannten Aspekte und/oder einer Verzahnungsbearbeitungsanordnung nach einem der oben genannten Aspekte. Anstelle des Wälzfräsens könnte jedoch auch z. B. das Wälzschälen (Power Skiving) mit Schälrad oder das Wälzstoßen mit einem Stoßrad als Herstellungsverfahren herangezogen werden.

Der gemeinsame Antrieb für die radiale Zustellbewegung kann als CNC-gesteuerter Servomotor auch die zum Anfasen erforderliche Anpreßkraft aufbringen. Der Antrieb für die Drehbewegung des Anfaswerkzeuges wird zum einen für die Anfasoperation im Wälzeingriff synchronisiert mit dem Drehantrieb für die Werkstückverzahnung. Zum anderen ist steuerungstechnisch vorgesehen, daß zur Herstellung des Kontakts im Wälzeingriff ein kraftfreies Einfädeln des Anfaswerkzeuges erfolgt und sich insbesondere ohne zusätzliche Einmittoperation eine Steuerinformation über die zum Wälzeingriff erforderliche Drehfase des Anfaswerkzeuges bereits aus der aufgrund der Erzeugung mit dem Primärwerkzeug vorliegenden Drehfaseninformation der Werkstückverzahnung bestimmen läßt (Übergabe der elektronischen Kopplung).

Auch die nicht zwingend mit der Zahnkopfstirnkantenfasenbearbeitung zusammenhängenden vorteilhaften Aspekte der Erfindung werden von der Erfindung als unabhängig schutzwürdig offenbart. Dies betrifft zum einen die Konfiguration des Bearbeitungswerkzeuges zum Sekundärgratentfernen mit der Bildung eines Bereiches radial geringerer Ausdehnung. Die Erfindung offenbart somit eigenständig schutzwürdig ebenfalls ein Bearbeitungswerkzeug zur Bearbeitung einer Stirnfläche einer Verzahnung, wobei das Bearbeitungswerkzeug scheibenartig mit einem gegenüber einem ersten umfänglichen Bereich einer ersten radialen Erstreckung eine unterschiedliche radiale Erstreckung aufweisenden zweiten umfänglichen Bereich gebildet ist und bei dem der erste umfängliche Bereich an wenigstens einer seiner Planseiten eine eine Feile bildende Oberflächenstruktur aufweist, insbesondere mit einem oder mehreren der weiteren oben erläuterten Gestaltungsmerkmale.

Zum anderen offenbart die Erfindung als eigenständig schutzwürdig eine Verzahnungsbearbeitungsanordnung mit einem um seine Anfaswerkzeugachse drehbar angetriebenen Anfaswerkzeug zur plastischen Verformung einer Stirnkante einer Verzahnung, insbesondere im Wälzentgraten, und insbesondere einem solchen Bearbeitungswerkzeug zur Sekundärgratentfernung, wobei die Sekundärgratbeseitigung und die Fasenbildung an der Zahnstirnkante bezüglich der zu bearbeitenden Verzahnung von der gleichen Seite her erfolgt, insbesondere mit einem oder mehreren der weiter oben erläuterten Gestaltungen, insbesondere den gemeinsamen Positionierantrieben und den getrennten Drehantrieben.

Weitere Einzelheiten, Merkmale und Vorteile der Erfindung ergeben sich aus der nachfolgenden Beschreibung mit Bezug auf die beigefügten Figuren, von denen
- Fig. 1: schematisch eine Werkzeugmaschine mit Anfas- und Entgratstation zeigt,
- Fig. 2: ein Bearbeitungswerkzeug einer ersten Ausführungsform in einer Perspektivansicht zeigt,
- Fig. 3: schematisch eine Werkstückverzahnung und deren Bearbeitungseingriff mit dem Bearbeitungswerkzeug aus Fig. 2 zeigt,
- Fig. 4: ein Flußdiagramm eines Verfahrensablaufs zeigt,
- Fig. 5: schematisch eine weitere Ausführungsform eines Bearbeitungswerkzeuges zeigt, und
- Fig. 6: schematisch einen Ausschnitt einer nochmals weiteren Ausführungsform eines Bearbeitungswerkzeugs zeigt.

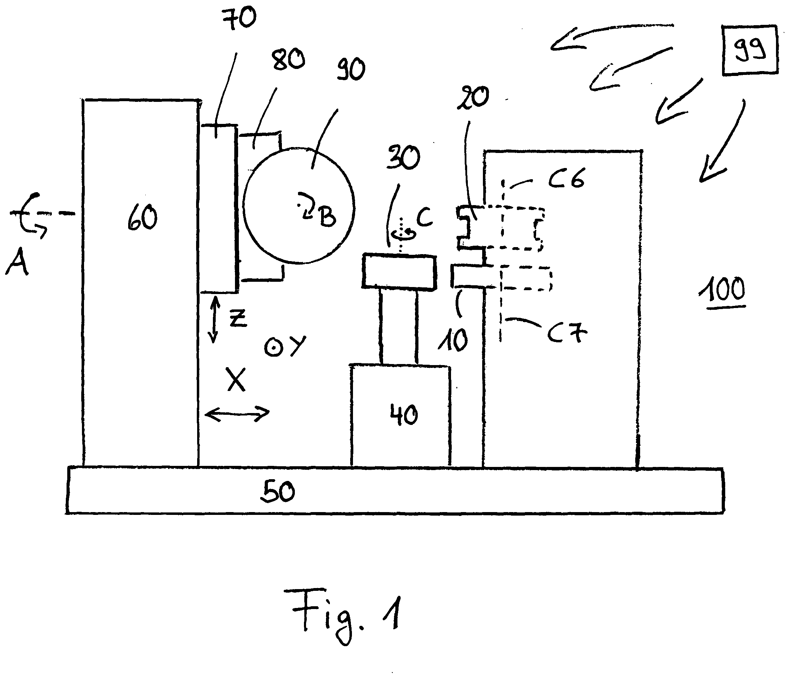

Die in Fig. 1 nur schematisch dargestellte Werkzeugmaschine 100 ist als Wälzfräsmaschine mit Wälzfräser 90 ausgebildet. Letzterer ist an einem Tangentialschlitten 80 angeordnet, der gegenüber einem Vertikalschlitten 70 drehbar gelagert (Achse A) von diesem getragen wird. Der Vertikalschlitten 70 ist wiederum vom Radialschlitten 60 getragen, der längs eines Maschinenbettes 50 zur Achsabstandsänderung der Werkzeugachse von der Achse eines über einen Werkstücktisch 40 aufgespannten, zu bearbeitenden Werkstückes 30 verschieblich ist. Seitens des Primärwerkzeuges, dem Wälzfräser 90, sind somit drei lineare Positionierachsen X, Y, Z sowie eine rotatorische Positionierachse A vorgesehen, die wie auch die Werkzeugdrehachse B und die Werkstückdrehachse C von einer Steuerung 99 CNC-gesteuert über entsprechende Antriebe angetrieben werden, z. B. Direktantriebe. Die in Fig. 1 gezeigten Positionierschlitten sind beispielhaft, und die erforderlichen Positionierachsen können ebenfalls durch konstruktiv andere Schlittenanordnungen realisiert werden.

Auf der dem Primärwerkzeug diametral entgegengesetzten Seite ist eine Anfas- und Entgratstation angeordnet, deren Werkzeuge 20, 10 über einen gemeinsamen Antrieb bezüglich der Radialrichtung X zu dem Werkstück 30 hin und von ihm weg bewegt werden können. Zudem ist die Höhenlage der Anfas- und Entgratwerkzeuge über einen gemeinsamen Antrieb einstellbar. Die Anfas- und Entgratstation kann auch an einer anderen Stelle um das Werkstück herum positioniert sein, solange der Zugriff auf das Werkstück gegeben ist.

Das in Fig. 1 oben dargestellte Anfaswerkzeug 20 ist als typisches Wälzentgratwerkzeug ausgebildet, mit zwei beabstandeten Verzahnungen, die unter einem von dem Radialantrieb aufgebrachten Anpreßdruck jeweils an einer Stirnseite mit der Werkstückverzahnung in Wälzkopplungseingriff steht und in bekannter Weise durch Verformung eine Fase an den Zahnstirnkanten der Werkstückverzahnung erzeugt.

Axial unterhalb des Anfaswerkzeugs 20 und diesem gegenüber gefedert gelagert ist ein scheibenförmiges Entgratwerkzeug 10 angeordnet, das um seine Drehachse C7, die in diesem Ausführungsbeispiel koaxial zur Drehachse C6 des Anfaswerkzeugs 20 verläuft, drehend antreibbar gelagert ist. Auch andere Positionierungen der Drehachsen C7 und C6 sind denkbar, z. B. eine parallele Anordnung.

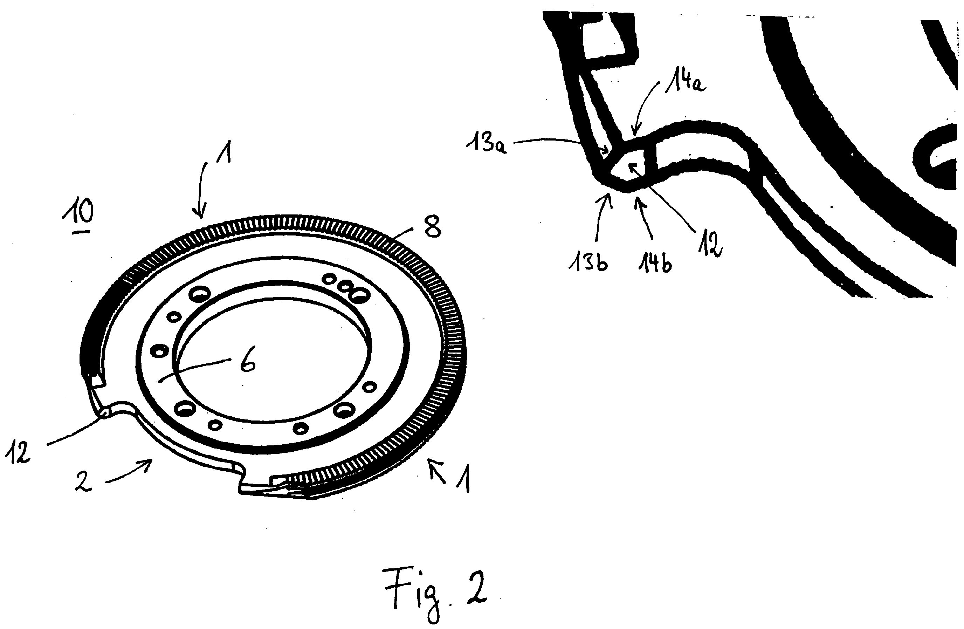

Eine Ausführungsform eines Entgratwerkzeugs 10 ist besser in Fig. 2 zu erkennen. Bei diesem ist das Entgratwerkzeug 10 beidseits über einen umfänglichen Bereich von ca. 270° als Feilscheibe ausgebildet, allerdings nicht über 360°. Vielmehr endet die als Feile ausgebildete Oberflächenstruktur 8 kurz bevor der (hohl-)scheibenartige Hauptkörper 6 einen radialen Einschnitt aufweist, der sich in diesem Ausführungsbeispiel über ca. 60° erstreckt. In diesem nach dem Einschnitt verbleibenden Bereich 2 weist der Hauptkörper 6 eine geringere radiale Abmessung auf als im übrigen Bereich 1. Eine sich im wesentlichen axial und radial erstreckende, aufgrund des Einschnittes freiliegende Fläche 12 am Übergang zwischen den Bereichen 1 und 2 weist radial außen zwei schräge erste Kanten 13a, b auf, da die Umfangsfläche des Hauptkörpers 6 zwischen dem Bereich mit Feilstruktur 8 und dem Übergang zwischen den Bereichen 1 und 2 von einer planaren in eine konische Form übergeht. Die Neigung der ersten Kanten 13a, b stimmt dabei mit der Neigung der Zahnkopfstirnkantenfase der Werkstückverzahnung überein. An die ersten Kanten 13a, b schließen sich horizontale zweite Kanten 14a, b an, die aus dem Schnitt mit der planaren Scheibenoberfläche des Hauptkörpers 6 hervorgehen.

Das Entgratwerkzeug 10 kann gegenüber dem Werkstück 30 in verschiedene Relativlagen positioniert werden und dabei unterschiedliche Funktionen ausüben, insbesondere unterschiedliche Bearbeitungen an dem Werkstück durchführen.

So kann das Entgratwerkzeug 10 in eine Drehlage verbracht werden, in der es mit seiner Feilenstruktur 8 dem Werkstück zugewandt ist, und mit Letzterer nach radialer Positionierung über axiale Zustellung auf Höhe der Werkstückverzahnungsstirnfläche mit dieser in einen ersten Bearbeitungseingriff gebracht werden. In diesem ersten Bearbeitungseingriff, in dem das Entgratwerkzeug 10 stillstehen kann (oder auch langsam rotieren könnte), können Sekundärgrate von der Stirnfläche der Werkstückverzahnung mit hoher Effektivität durch Abfeilen beseitigt werden. Das Anfaswerkzeug 20 ist hierbei außer Kollisionsgefahr, da seine radiale Abmessung um etwa die radiale Tiefe der Feile geringer ist als die des Entgratwerkzeugs 10.

Des weiteren kann das Entgratwerkzeug in eine Drehlage gebracht werden, in der der Radialvektor der Fläche 12 auf das Werkstück gerichtet ist und eine der ersten Kanten 13a, b durch Axial- und Radialpositionierung in einen zweiten Bearbeitungseingriff mit der Fläche der Zahnkopfstirnkantenfase gleicher Neigung gebracht wird. In diesem zweiten Bearbeitungseingriff kann ein Materialüberstand von der Zahnkopfstirnkantenfase unter Werkstückdrehung durch Drehen abgenommen werden. Ein solcher Materialüberstand kann etwa durch die Ausbildung der Zahnstirnkantenfase im Bereich nahe des Zahnkopfes durch das Anfaswerkzeug 20 entstanden sein.

In der Drehlage des zweiten Bearbeitungseingriffes kann das Entgratwerkzeug 10 zudem in eine gegenüber der Höhenlage des zweiten Bearbeitungseingriffs geänderte Höhenlage verbracht werden, in der die zweiten Kanten 14a (b) auf der gleichen Höhe zu liegen kommen wie die Stirnfläche der zu bearbeitenden Verzahnung. Bei passender radialer Zustellung kann in dieser Positionierung in einem dritten Bearbeitungseingriff z. B. bereits während der Erzeugung der Verzahnung durch das Primärwerkzeug ein auf der (auslaufenden) Stirnfläche aufgeworfener Primärgrat durch Drehen beseitigt werden. Belastungen für die Feilenstruktur 8 werden dadurch vermindert, indem Letztere vornehmlich für die Beseitigung der Sekundärgrate herangezogen wird.

Zudem übt das Entgratwerkzeug 10 in einer weiteren Drehlage eine Funktion dahingehend aus, daß das Anfaswerkzeug 20 an der Verzahnung des Werkstückes 3 die Stirnkantenfase ausbilden kann, ohne daß das Werkstück 30 mit dem Entgratwerkzeug 10 kollidiert. In dieser Drehlage ist der Bereich 2 geringerer radialer Ausdehnung des Hauptkörpers 6 dem Werkstück 30 zugewandt, z. B. indem die umfängliche Mitte des Bereiches 2 auf die radiale Zustellachse gedreht wird. Ist der Bereich 2 wie im gezeigten Ausführungsbeispiel um etwa das Doppelte der radialen Tiefe der Feilenstruktur 8 radial geringer ausgedehnt als das Entgratwerkzeug 10 im ersten Bereich 1, besteht somit ein ausreichender radialer Sicherheitsabstand zwischen Werkstück 30 und Entgratwerkzeug 10, wenn das Anfaswerkzeug 20 in Bearbeitungseingriff mit der Verzahnung des Werkstücks 30 steht.

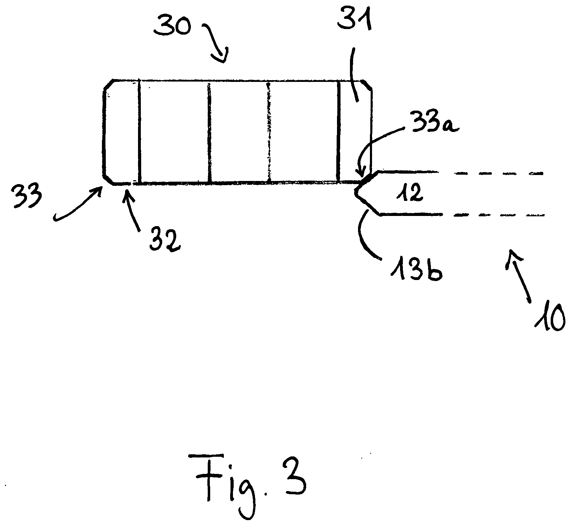

In Fig. 3 ist nochmals das Werkstück 30 mit Verzahnung 31 und Zahnkopfstirnkantenfase 33 dargestellt sowie der zweite Bearbeitungseingriff des Entgratwerkzeugs 10, in welchem die erste Kante 13a der Fläche 12 die Zahnkopfstirnkantenfase 33a der Verzahnung 31 von Materialüberständen befreit.

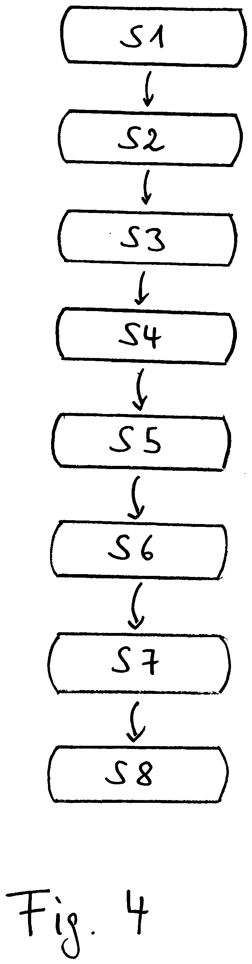

Nun wird anhand von dem Verfahrensablaufschema von Fig. 4 eine Verzahnungsbearbeitung der Werkzeugmaschine 100 dargestellt, die eine mögliche verfahrenstechnische Ausgestaltung der Erfindung ist.

In Schritt S1 wird das mit Zahnkopfstirnkantenfase 33 versehene Werkstück 30 auf der Werkstückspindel aufgespannt. In Schritt S2 wird die Verzahnung 31 im wesentlichen bis auf volle Verzahnungstiefe durch Wälzfräsen des Wälzfräsers 90 geschnitten. Bei z. B. rechtssteigendem Wälzfräser 90 ist die Werkstückdrehrichtung gegen den Uhrzeigersinn (Drehrichtung W1). Zur Entfernung der dabei entstehenden Primärgrate steht dabei das Entgratwerkzeug 10 in dem oben erläuterten dritten Bearbeitungseingriff mit dem Werkstück 30.

In Schritt S3 werden durch Anfasen mit dem Anfaswerkzeug 20 die Fasen an den Zahnstirnkanten 32 der Werkstückverzahnung 31 erzeugt. Dazu wird der Wälzfräser 90 zurückgezogen, die elektronische Kopplung an das Anfaswerkzeug übergeben (Drehrichtung W1). Für eine höhere Bearbeitungsqualität kann der Bearbeitungseingriff nochmals nach Drehrichtungsumkehr (Drehrichtung W2) wiederholt werden.

In Schritt S4 wird in dem oben erläuterten zweiten Bearbeitungseingriff des Entgratwerkzeugs die Zahnkopfstirnkantenfase an der z. B. unteren Stirnfläche bearbeitet, unter Rotation des Werkstückes 30 in derselben Drehrichtung, mit der der Schritt S3 beendet wurde, und nach Repositionierung des Entgratwerkzeugs 10 zur Zahnkopfstirnkantenfasenbearbeitung an der anderen Stirnseite der zweite Bearbeitungseingriff an dieser Stirnseite vorgenommen (Schritt S5). Die Werkstückdrehzahl kann dabei möglichst groß gewählt werden, auch maximal.

In Schritt S6 erfolgt zum einen die Beseitigung der Sekundärgrate an z. B. der unteren Stirnfläche durch den oben erläuterten ersten Bearbeitungseingriff des axial zugestellten Entgratwerkzeugs 10 (Abfeilen). Zudem kann zeitparallel der Wälzfräser 90 in einem zweiten Schnitt nahe der unteren Stirnseite Materialaufwürfe von den Zahnflanken beseitigen, die ebenfalls beim Anfasen der Zahnstirnkanten entstanden sind. Dazu wird ein Drehrichtungswechsel (Drehrichtung W1) vorgenommen und die elektronische Kopplung wieder an den Wälzfräser übergeben.

Nach entsprechender Repositionierung der Bearbeitungswerkzeuge erfolgt die gleiche Bearbeitung des Schrittes S6 an der anderen Stirnseite der Werkstückverzahnung 31 in Schritt S7. Während des Abfeilens wird das Entgratwerkzeug zur gleichmäßigen Belastung um etwa den dem Umfangsbereich der Feilenstruktur 8 entsprechenden Winkel langsam gedreht.

In Schritt S8 wird nach Rückzug der Werkzeuge das nunmehr fertig weichbearbeitete Werkstück 30 von der Werkstückspindel abgenommen und der weiteren Verarbeitung übergeben.

Die Bearbeitungsreihenfolge obere und untere Stirnseite des Werkstückes 30 kann jedoch ebensogut variiert oder umgedreht werden.

Aus Fig. 2 ist noch zu erkennen, daß die Trennflächen 12 zwischen dem ersten Bereich 1 und dem zweiten Bereich 2 an beiden umfänglichen Enden des zweiten Bereichs 2 gebildet sind, so daß der oben erläuterte zweite und dritte Bearbeitungseingriff unabhängig von der Drehrichtung des Werkstückes 30 geeignet erfolgen kann.

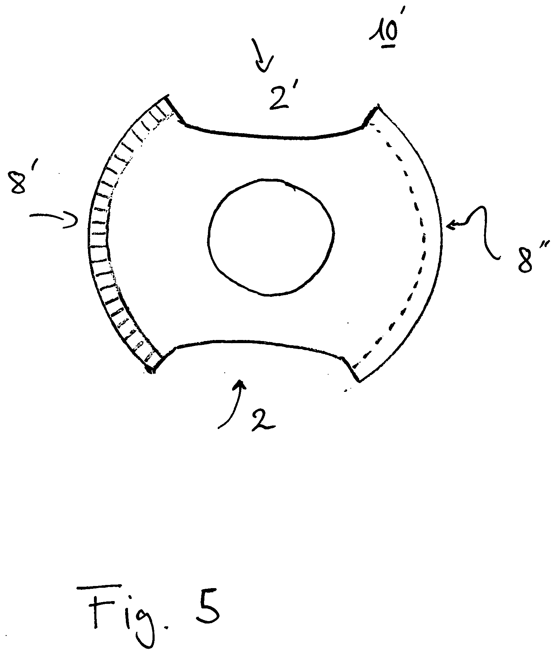

In Fig. 5 ist noch eine weitere Ausführungsform eines Entgratrades 10' dargestellt. Es unterscheidet sich von dem Entgratwerkzeug 10 aus Fig. 2 durch einen dem zweiten Bereich 2 diametral gegenüberliegenden weiteren Bereich 2' geringerer radialer Ausdehnung. Mithin weist der erste Bereich 1 in diesem Abschnitt eine Unterbrechung auf, so daß zwei weitere Übergänge geschaffen sind, mit entsprechenden ersten Kanten 13'a, b und zweiten Kanten 14'a, b. Die umfängliche Erstreckung der Bereiche 2, 2' beträgt jeweils ca. 50°.

Der Vorteil dieser zweiten Ausführungsform liegt in der unterschiedlichen Gestaltungsmöglichkeit der beiden Bereiche mit der Feilenstruktur 8' einerseits und/oder der beiden Bereiche geringer radialer Abmessung 2, 2' hinsichtlich deren geometrischer Konfiguration andererseits. Dabei ist der Bereich 2 für den zweiten und dritten Bearbeitungseingriff der einen Stirnseite des Werkstücks (mit ihren (Stör-)Konturen) und der Bereich 2' bzw. dessen Übergänge für die Bearbeitung des Werkstücks an der anderen Stirnseite (mit deren (Stör-)Konturen) passend ausgelegt, wie auch die Feilenbereiche 8', 8". Beispielsweise ist Feilenbereich 8' nur für eine Bearbeitungsseite passend, während auf der entgegengesetzten Werkzeugseite Feilenbereich 8" nur für die andere Bearbeitungsseite des Werkstückes einsetzbar ist, beispielsweise aufgrund unterschiedlicher Form der Werkstückstirnseiten, wie Stirnschrägen und/oder Radien und/oder Freistiche.

Zudem können bei Bedarf die beiden nunmehr getrennten Abschnitte der Feilenstruktur 8 unterschiedlich ausgebildet sein, beispielsweise in eine Grobfeile und eine Feinfeile. Letzteres ist auch bei der in Fig. 2 dargestellten Ausführungsform möglich.

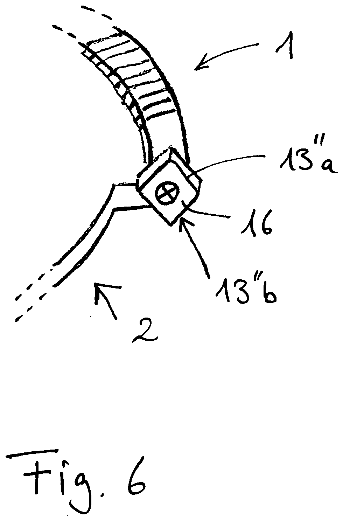

Bei den in Fig. 2 und Fig. 5 dargestellten Ausführungsformen des Entgratwerkzeugs 10, 10' sind die Schneidkanten 13a, b/14a, b unmittelbare Kanten des Materials des Hauptkörpers 6. Bei der in Fig. 6 ausschnittsweise dargestellten Ausführungsform ist dagegen ein HM-Einsatz 16 beispielsweise durch Verschrauben an der Fläche 12 angebracht, welcher die Schneidkanten 13"a, b trägt. So kann z. B. auch zu einem Werkzeughauptkörper 6 mit Feilenstruktur 8 ein Satz aus mehreren solchen HM-Einsätzen 16, 16', ggf. mit geometrisch unterschiedlich verlaufenden Schneidkanten, vorgesehen werden.

Das Anfaswerkzeug 20 könnte zudem noch einen Glättbereich aufweisen, wie in Bild 8.2-5 auf Seite 309 der zitierten Literaturstelle Bausch gezeigt ist oder wie in Bild 8.2-6 auf Seite 310 gezeigt, insbesondere wenn die Beseitigung der Materialaufwürfe auf den Zahnflanken nicht durch das Primärwerkzeug (30) beseitigt werden sollen.

Auch unabhängig von jeglicher Bearbeitung einer Zahnkopfkantenstirnfase weist eine Feilscheibe mit Ausnehmung, d. h. einem Bereich geringerer radialer Ausdehnung, Vorteile dahingehend auf, daß das Anfaswerkzeug 20 und ein solches Entgratwerkzeug auch ohne den oben erläuterten zweiten Bearbeitungseingriff zusammenwirken können, insbesondere hinsichtlich ihrer gemeinsamen Zustellantriebe und der jeweils kollisionsfreien Positionierung des nicht arbeitenden Werkzeugs.

Die Erfindung ist nicht auf die in den Ausführungsbeispielen dargestellten konstruktiven Merkmale eingeschränkt.

## Patentansprüche

1. Verzahnungsbearbeitungsanordnung mit einem um seine Anfaswerkzeugachse drehbar angetriebenen Anfaswerkzeug (20) zur plastischen Verformung einer Stirnkante einer Verzahnung (31) und einem Bearbeitungswerkzeug (10, 10') zur Bearbeitung einer an einer Zahnkopfstirnkante der Verzahnung gebildeten Fase (33), mit einer Schneidkante (13a, b) zur Abnahme eines Materialüberstands von der Zahnkopfstirnkantenfase (33), **dadurch gekennzeichnet, dass** das Bearbeitungswerkzeug scheibenartig mit einem gegenüber einem ersten umfänglichen Bereich (1) einer ersten radialen Erstreckung eine unterschiedliche radiale Erstreckung aufweisenden zweiten umfänglichen Bereich (2) gebildet ist und die Schneidkante (13a, b) an einem Übergang zwischen dem ersten (1) und dem zweiten (2) umfänglichen Bereich angeordnet ist.

2. Verzahnungsbearbeitungsanordnung nach Anspruch 1, bei der das Anfaswerkzeug und das Bearbeitungswerkzeug zur Bearbeitung einer Verzahnung von der gleichen Seite her positioniert sind und bevorzugt parallele, insbesondere koaxiale Drehachsen aufweisen.

3. Verzahnungsbearbeitungsanordnung nach Anspruch 1 oder 2, mit einem ersten sowohl die radiale Zustellung des Anfaswerkzeugs als auch die des Bearbeitungswerkzeugs bewirkenden gemeinsamen Antrieb und/oder einem zweiten sowohl die axiale Verschiebung des Anfaswerkzeugs als auch die des Bearbeitungswerkzeugs bewirkenden gemeinsamen Antrieb.

4. Verzahnungsbearbeitungsanordnung nach einem der Ansprüche 1 bis 3, bei der das Anfaswerkzeug und das Bearbeitungswerkzeug um ihre jeweiligen Achsen unabhängig voneinander drehbar antreibbar sind.

5. Verzahnungsbearbeitungsanordnung nach einem der Ansprüche 1 bis 4, die eine erste Betriebsstellung einnehmen kann, in der das Anfaswerkzeug das Schneidwerkzeug bezüglich der radialen Zustellrichtung auf die zu bearbeitende Verzahnung hin radial überragt und in einer zweiten Betriebsstellung vice versa, wobei ein Übergang zwischen den beiden Betriebsstellungen durch eine Drehung des Bearbeitungswerkzeugs bewirkbar ist.

6. Verzahnungsbearbeitungsanordnung nach einem der Ansprüche 1 bis 5, bei der das Bearbeitungswerkzeug gegenüber dem Anfaswerkzeug axial federnd gelagert ist.

7. Verfahren zum Bearbeiten einer an einer Zahnkopfstirnseite mit einer Fase (33) versehenen Verzahnung (31), bei dem ein infolge einer Fasenbildung an einer Zahnstirnkante (32) der Verzahnung mittels plastischer Verformung und/oder infolge einer Beseitigung eines bei der Erzeugung der Verzahnung und ggf. der Zahnstirnkantenfasenbildung an der Stirnseite erzeugten Primär-/Sekundärgrates an der Zahnkopfstirnkantenfase (33) entstandener Materialüberstand durch einen Bearbeitungseingriff eines mit einer Schneide (13a, b) versehenen Bearbeitungswerkzeugs (10, 10') in einer Drehoperation abgenommen wird, **dadurch gekennzeichnet, dass** das Bearbeitungswerkzeug scheibenartig mit einem gegenüber einem ersten umfänglichen Bereich (1) einer ersten radialen Erstreckung eine unterschiedliche radiale Erstreckung aufweisenden zweiten umfänglichen Bereich (2) gebildet ist und die Schneidkante (13a, b) an einem Übergang zwischen dem ersten (1) und dem zweiten (2) umfänglichen Bereich angeordnet ist.

8. Verfahren nach Anspruch 7, bei dem die Beseitigung der Sekundärgrate und/oder die Fasenbildung an der Zahnstirnkante an demselben Ort und/oder in derselben Aufspannung der bearbeiteten Verzahnung erfolgt wie die Drehoperation und insbesondere von der gleichen Seite her.

9. Verfahren nach Anspruch 7 oder 8, bei dem die Beseitigung der Sekundärgrate mit dem gleichen Bearbeitungswerkzeug (10, 10') erfolgt wir die Drehoperation, insbesondere durch Abfeilen.

10. Verfahren nach einem der Ansprüche 7 bis 9, bei dem man ebenfalls mit dem Bearbeitungswerkzeug insbesondere während der Erzeugung der Verzahnung eine Beseitigung der dabei entstandenen Primärgrate an der Stirnseite der Verzahnung vornimmt.

11. Verfahren nach einem der Ansprüche 7 bis 10, bei dem eine werkzeugseitige radiale Zustellbewegung für die Zahnstirnkantenfasenbildung und für die Drehoperation gekoppelt sind, eine werkzeugseitige axiale Verschiebungsbewegung für die Zahnstirnkantenfasenbildung und für die Drehoperation gekoppelt sind und/oder werkzeugseitige rotatorische Bewegungsmöglichkeiten zur Zahnstirnkantenfasenbildung und Drehoperation voneinander entkoppelt sind.

12. Verfahren nach einem der Ansprüche 7 bis 11, bei dem das Bearbeitungswerkzeug (10, 10') zwischen seinem Einsatz und der Zahnstirnkantenfasenbildung in eine unterschiedliche Drehlage verbracht wird.

13. Verfahren nach einem der Ansprüche 7 bis 12, bei dem eine Neigung der Schneidkante (13a, b) mit der Neigung der Zahnkopfstirnkantenfase (33) übereinstimmt.

14. Bearbeitungswerkzeug (10, 10') zur Bearbeitung einer an einer Zahnkopfstirnseite einer Verzahnung gebildeten Fase (33) gemäß einem Verfahren nach einem der Ansprüche 7 bis 13, mit einer Schneidkante (13a, b) zur Abnahme eines Materialüberstands von der Zahnkopfstirnkantenfase (33), **dadurch gekennzeichnet, dass** das Bearbeitungswerkzeug scheibenartig mit einem gegenüber einem ersten umfänglichen Bereich (1) einer ersten radialen Erstreckung eine unterschiedliche radiale Erstreckung aufweisenden zweiten umfänglichen Bereich (2) gebildet ist und die Schneidkante (13a, b) an einem Übergang zwischen dem ersten (1) und dem zweiten (2) umfänglichen Bereich angeordnet ist, wobei der erste umfängliche Bereich an wenigstens einer seiner Planseiten eine eine Feile bildende Oberflächenstruktur (8) aufweist.

15. Bearbeitungswerkzeug nach Anspruch 14, bei dem an dem Übergang eine Trennfläche (12) mit einer radialen und einer axialen Haupterstreckungskomponente gebildet ist, und die Schneidkante eine Außenkante der Trennfläche ist oder an einem darauf angebrachten Schneideinsatz (16) gebildet ist.

16. Bearbeitungswerkzeug nach Anspruch 15, bei dem der zweite Bereich (2) eine geringere radiale Ausdehnung hat als der erste Bereich (1).

17. Bearbeitungswerkzeug nach einem der Ansprüche 14 bis 16, bei dem der erste Bereich zwei in ihrer geometrischen Konfiguration unterschiedliche und insbesondere umfänglich voneinander beabstandete Unterbereiche aufweist.

18. Bearbeitungswerkzeug nach Anspruch 17, bei dem ein umfänglicher, zwischen zwei Unterbereichen gebildeter Zwischenbereich (2') am Übergang zu einem angrenzenden Unterbereich ebenfalls eine Schneidkante aufweist und/oder gegenüber diesem eine geringere radiale Ausdehnung hat.

19. Bearbeitungswerkzeug nach einem der Ansprüche 14 bis 18, bei dem im Bereich des Übergangs zwischen dem ersten und dem zweiten Bereich eine weitere Schneidkante (14a, b) gebildet ist, deren Erstreckungsrichtung im Wesentlichen parallel zur Scheibenebene verläuft, mit wenigstens radialer Komponente.

20. Bearbeitungswerkzeug nach einem der Ansprüche 14 bis 19, das an einem zentralen Scheibenbereich für eine eine Drehbarkeit um seine Scheibenachse erlaubende Aufspannung ausgelegt ist.

21. Bearbeitungswerkzeug nach einem der Ansprüche 14 bis 20, bei dem eine Neigung der Schneidkante (13a, b) mit der Neigung der zu bearbeitenden Zahnkopfstirnkantenfase (33) übereinstimmt.

22. Verzahnungsbearbeitungsanordnung nach einem der Ansprüche 1 bis 6, bei der das Bearbeitungswerkzeug nach einem der Ansprüche 14 bis 21 ausgebildet ist.

23. Werkzeugmaschine zur Verzahnungsbearbeitung mit einem Verzahnungswerkzeug (90), insbesondere einem Wälzfräser, zur Erzeugung einer Verzahnung an einem Werkstück sowie einem Bearbeitungswerkzeug (10, 10') nach einem der Ansprüche 14 bis 21 oder einer Verzahnungsbearbeitungsanordnung nach einem der Ansprüche 1 bis 6 oder 22.

## Claims

1. A toothing machining arrangement comprising a chamfering tool (20) rotatably driven around its chamfering tool axis for plastic deformation of an end edge of a toothing (31) and a machining tool (10, 10') for machining a chamfer (33) formed on a tooth tip end edge of the toothing, said machining tool comprising a cutting edge (13a, b) for removing excess material from the chamfer (33) on the tooth tip end edge, **characterised in that** the machining tool is formed in the manner of a disc, said disc having a second peripheral region (2) having a radial extension different from a first radial extension of a first peripheral region (1), and the cutting edge (13a, b) is arranged at a transition between the first (1) and second (2) peripheral regions.

2. The toothing machining arrangement in accordance with claim 1, wherein the chamfering tool and the machining tool are positioned from the same side for machining a toothing and preferably have parallel, in particular coaxial, rotary axes.

3. The toothing machining arrangement in accordance with claim 1 or 2, comprising a first common drive that effects the radial infeed of both the chamfering tool and the machining tool and/or a second common drive that effects the axial displacement of both the chamfering tool and the machining tool.

4. The toothing machining arrangement in accordance with one of claims 1 to 3, wherein the chamfering tool and machining tool can be rotatably driven around their respective axes independently of one another.

5. The toothing machining arrangement in accordance with one of claims 1 to 4, said toothing machining arrangement being able to adopt a first operating position in which the chamfering tool projects radially beyond the cutting tool relative to the radial infeed direction towards the toothing to be machined, and vice versa in a second operating position, wherein a transition between the two operating positions can be achieved by rotating the machining tool.

6. The toothing machining arrangement in accordance with one of claims 1 to 5, wherein the machining tool is axially spring-mounted relative to the chamfering tool.

7. A method for machining a toothing (31) that is provided with a chamfer (33) on a tooth tip end face, wherein excess material created on the chamfer (33) on the tooth tip end edge and resulting from chamfering on a tooth end edge (32) of the toothing by means of plastic deformation and/or resulting from removal of a primary or secondary burr produced on the end face during production of the toothing and possibly during chamfering on the tooth tip end edge is removed by a machining engagement, in a turning operation, of a machining tool (10, 10') that is provided with a cutting edge (13a, b), **characterised in that** the machining tool is formed in the manner of a disc, said disc having a second peripheral region (2) having a radial extension different from a first radial extension of a first peripheral region (1), and the cutting edge (13a, b) is arranged at a transition between the first (1) and second (2) peripheral regions.

8. The method in accordance with claim 7, wherein the removal of the secondary burr and/or the chamfering on the tooth end edge take place in the same place and/or in the same setting of the machined toothing as the turning operation, and in particular from the same side.

9. The method in accordance with claim 7 or 8, wherein the removal of the secondary burr is performed using the same machining tool (10, 10') as the turning operation, in particular by filing off the burr.

10. The method in accordance with one of claims 7 to 9, wherein the primary burr produced on the end face of the toothing is also removed using the machining tool, in particular during the production of the toothing.

11. The method in accordance with one of claims 7 to 10, wherein radial infeed motions on the tool side for the chamfering on the tooth end edge and for the turning operation are coupled together, axial displacement motions on the tool side for the chamfering on the tooth end edge and for the turning operation are coupled together and/or rotary movement possibilities on the tool side for the chamfering on the tooth end edge and for the turning operation are decoupled from one another.

12. The method in accordance with one of claims 7 to 11, wherein the machining tool (10, 10') is moved into a different rotational position between its use and the chamfering of the tooth end edge.

13. The method in accordance with one of claims 7 to 12, wherein a tilt of the cutting edge (13a, b) matches the tilt of the chamfer (33) on the tooth tip end edge.

14. A machining tool (10, 10') for machining a chamfer (33) formed on a tooth tip end face of the toothing using a method in accordance with one of claims 7 to 13, said machining tool comprising a cutting edge (13a, b) for removing excess material from the chamfer (33) on the tooth tip end edge, **characterised in that** the machining tool is formed in the manner of a disc, said disc having a second peripheral region (2) having a radial extension different from a first radial extension of a first peripheral region (1), and the cutting edge (13a, b) is arranged at a transition between the first (1) and second (2) peripheral regions, wherein the first peripheral region has, on at least one of its flat surfaces, a surface structure (8) forming a file.

15. The machining tool in accordance with claim 14, wherein a joint face (12) with a radial and axial main extension component is formed at the transition, and wherein the cutting edge is an outer edge of the joint face or is formed on a cutting insert (16) attached to the joint face.

16. The machining tool in accordance with claim 15, wherein the second region (2) has a smaller radial extension than the first region (1).

17. The machining tool in accordance with one of claims 14 to 16, wherein the first region comprises two subregions that have different geometrical configurations and in particular are peripherally spaced from one another.

18. The machining tool in accordance with claim 17, wherein a peripheral intermediate region (2') formed between two subregions also has a cutting edge at the transition to an adjacent subregion and/or has a smaller radial extension compared to that of the first subregion.

19. The machining tool in accordance with one of claims 14 to 18, wherein a further cutting edge (14a, b) having at least one radial direction component is formed in the region of the transition between the first and second region, the direction of extension of which cutting edge runs substantially parallel to the disc plane.

20. The machining tool in accordance with one of claims 14 to 19, wherein the machining tool is configured, in a central disc region, so as to have a setting that permits rotatability around its disc axis.

21. The machining tool in accordance one of with claims 14 to 20, wherein a tilt of the cutting edge (13a, b) matches the tilt of the chamfer (33) to be machined on the tooth tip end edge.

22. The toothing machining arrangement in accordance with one of claims 1 to 6, wherein the machining tool is configured in accordance with one of claims 14 to 21.

23. A machine tool for machining toothings, comprising a gear-cutting tool (90), in particular a gear hobber, for producing a toothing on a workpiece, and comprising a machining tool (10, 10') in accordance with one of claims 14 to 21 or a toothing machining arrangement in accordance with one of claims 1 to 6 or claim 22.

## Revendications

1. Dispositif d'usinage de denture comprenant un outil de chanfreinage (20) entraîné en rotation sur son axe pour effectuer la déformation plastique d'une arête frontale d'une denture (31), et un outil d'usinage (10, 10') qui est destiné à usiner un chanfrein (33) formé sur une arête frontale de tête de dent de la denture et qui est doté d'une arête de coupe (13a, b) destinée à éliminer un excédent de matériau du chanfrein d'arête frontale de tête de dent (33), **caractérisé en ce que** l'outil d'usinage est en forme de disque et comporte une deuxième zone périphérique (2) présentant une étendue radiale différente d'une première étendue radiale d'une première zone périphérique (1) et **en ce que** l'arête de coupe (13a, b) est agencée sur une zone de transition existant entre la première (1) et la deuxième (2) zone périphérique.

2. Dispositif d'usinage de denture selon la revendication 1, dans lequel l'outil de chanfreinage et l'outil d'usinage sont disposés à partir du même côté pour l'usinage d'une denture et présentent des axes de rotation de préférence parallèles, notamment coaxiaux.

3. Dispositif d'usinage de denture selon la revendication 1 ou 2, comportant un premier dispositif d'entraînement commun occasionnant l'approche radiale de l'outil de chanfreinage ainsi que celle de l'outil d'usinage et/ou un deuxième dispositif d'entraînement commun occasionnant la translation axiale de l'outil de chanfreinage ainsi que celle de l'outil d'usinage.

4. Dispositif d'usinage de denture selon l'une des revendications 1 à 3, dans lequel l'outil de chanfreinage et l'outil d'usinage sont susceptibles d'être entraînés en rotation sur leur axe respectif indépendamment l'un de l'autre.

5. Dispositif d'usinage de denture selon l'une des revendications 1 à 4, apte à adopter une première position fonctionnelle dans laquelle l'outil de chanfreinage dépasse radialement de l'outil de coupe, eu égard à la direction d'approche radiale, vers la denture à usiner, et inversement dans une deuxième position fonctionnelle, le passage d'une de ces deux positions fonctionnelles à l'autre se faisant par rotation de l'outil d'usinage.

6. Dispositif d'usinage de denture selon l'une des revendications 1 à 5, dans lequel l'outil d'usinage est monté de manière axialement élastique par rapport à l'outil de chanfreinage.

7. Procédé d'usinage d'une denture (31) dotée d'un chanfrein (33) au niveau d'une face frontale de tête de dent, dans lequel, grâce à un contact d'usinage d'un outil d'usinage (10, 10') doté d'un tranchant (13a, b), on élimine lors d'une opération de tournage, au niveau du chanfrein d'arête frontale de tête de dent (33), un excédent de matériau résultant d'un chanfreinage réalisé sur une arête frontale de dent (32) de la denture au moyen d'une déformation plastique et/ou résultant de l'élimination d'une bavure primaire ou secondaire produite au niveau de la face frontale lors de la production de la denture et éventuellement lors du chanfreinage de l'arête frontale de dent, **caractérisé en ce que** l'outil d'usinage est en forme de disque et comporte une deuxième zone périphérique (2) présentant une étendue radiale différente d'une première étendue radiale d'une première zone périphérique (1) et **en ce que** l'arête de coupe (13a, b) est agencée sur une zone de transition existant entre la première (1) et la deuxième (2) zone périphérique.

8. Procédé selon la revendication 7, dans lequel l'élimination de la bavure secondaire et/ou le chanfreinage réalisé au niveau de l'arête frontale de dent se produisent au même endroit et/ou dans un même calage de la denture à usiner que lors de l'opération de tournage et notamment par le même côté.

9. Procédé selon la revendication 7 ou 8, dans lequel l'élimination de la bavure secondaire s'effectue avec le même outil d'usinage (10, 10') que celui de l'opération de tournage, notamment par limage.

10. Procédé selon l'une des revendications 7 à 9, dans lequel on entreprend également, à l'aide de l'outil d'usinage et notamment au cours de la production de la denture, une élimination de la bavure primaire qui en résulte, au niveau de la face frontale de la denture.

11. Procédé selon l'une des revendications 7 à 10, dans lequel un mouvement d'approche radial côté outil réalisé aux fins du chanfreinage de l'arête frontale de dent et celui réalisé aux fins de l'opération de tournage sont couplés, un mouvement de translation axiale côté outil réalisé aux fins du chanfreinage de l'arête frontale de dent et celui réalisé aux fins de l'opération de tournage sont couplés et/ou les possibilités de mouvement de rotation côté outil aux fins du chanfreinage de l'arête frontale de dent et l'opération de tournage sont découplées entre elles.

12. Procédé selon l'une des revendications 7 à 11, dans lequel l'outil d'usinage (10, 10') est amené à prendre une position en rotation différente, entre son utilisation et le chanfreinage de l'arête frontale de dent.

13. Procédé selon l'une des revendications 7 à 12, dans lequel une inclinaison de l'arête de coupe (13a, b) coïncide avec l'inclinaison du chanfrein d'arête frontale de tête de dent (33).

14. Outil d'usinage (10, 10') permettant d'usiner un chanfrein (33) formé sur une face frontale de tête de dent d'une denture suivant un procédé selon l'une des revendications 7 à 13, et comportant une arête de coupe (13a, b) destinée à éliminer un excédent de matériau du chanfrein d'arête frontale de tête de dent (33), **caractérisé en ce que** l'outil d'usinage est en forme de disque et comporte une deuxième zone périphérique (2) présentant une étendue radiale différente d'une première étendue radiale d'une première zone périphérique (1) et **en ce que** l'arête de coupe (13a, b) est agencée sur une zone de transition existant entre la première (1) et la deuxième (2) zone périphérique, ladite première zone périphérique présentant, sur au moins une de ses faces planes, une structure de surface (8) formant une lime.

15. Outil d'usinage selon la revendication 14, dans lequel il est formé, sur la zone de transition, une surface de séparation (12) présentant une composante d'étendue principale radiale et une composante d'étendue principale axiale, et l'arête de coupe constitue une arête extérieure de la surface de séparation ou est conçue sur une plaquette (16) rapportée sur celle-ci.

16. Outil d'usinage selon la revendication 15, dans lequel la deuxième zone (2) présente une étendue radiale inférieure à la première zone (1).

17. Outil d'usinage selon l'une des revendications 14 à 16, dans lequel la première zone présente deux sous-zones de configuration géométrique différente, notamment espacées circonférentiellement l'une de l'autre.

18. Outil d'usinage selon la revendication 17, dans lequel une zone intermédiaire (2') périphérique formée entre deux sous-zones présente elle aussi une arête de coupe au niveau de la zone de transition avec une sous-zone contiguë et/ou présente une moindre étendue radiale par rapport à celle-ci.

19. Outil d'usinage selon l'une des revendications 14 à 18, dans lequel il est formé une autre arête de coupe (14a, b) à proximité de la zone de transition entre la première et la deuxième zone, laquelle présente une direction d'étendue sensiblement parallèle au plan du disque, avec au moins une composante radiale.

20. Outil d'usinage selon l'une des revendications 14 à 19, conçu, sur une zone de disque centrale, pour un calage permettant sa rotation sur son axe de disque.

21. Outil d'usinage selon l'une des revendications 14 à 20, dans lequel une inclinaison de l'arête de coupe (13a, b) coïncide avec l'inclinaison du chanfrein d'arête frontale de tête de dent (33) à usiner.

22. Dispositif d'usinage de denture selon l'une des revendications 1 à 6, dans lequel l'outil d'usinage est conçu selon l'une des revendications 14 à 21.

23. Machine-outil destinée à l'usinage d'une denture, comportant un outil de taillage de denture (90), notamment une fraise-mère, pour produire une denture sur une pièce à usiner, ainsi qu'un outil d'usinage (10, 10') selon l'une des revendications 14 à 21 ou un dispositif d'usinage de denture selon l'une des revendications 1 à 6 ou 22.
